# EUROPÄISCHE PATENTANMELDUNG

(11) **EP 2 974 585 A1**
(43) Veröffentlichungstag der Anmeldung: **20.01.2016**
(21) Anmeldenummer: 15401070.6
(22) Anmeldetag: 09.07.2015
(51) Int. Cl.: A01C 7/20, A01C 5/06

(54) **SÄSCHAR**

(30) Priorität: 15.07.2014 DE 102014109881
(71) Anmelder: Amazonen-Werke H. Dreyer GmbH & Co. KG, 49205 Hasbergen (DE)
(72) Erfinder: WILKEN, Martin, 26123 Oldenburg (DE); HÜER, Berthold, 49740 Haselünne (DE)

(57) **Zusammenfassung**

Säschar (1) mit einem Scharträger (2), an dem zwei schräg zur Fahrtrichtung (7) und entgegengesetzt V-förmig zueinander angestellte Scheiben (4), zwischen denen das Endstück (8) zumindest einer Saatgut- und/oder Düngerzuleitung ausmündend, angeordnet sind, wobei das Endstück (8) abnehmbar an dem Scheibenträger (2) mithilfe eines ersten, ein Festsetzelement aufweisenden Verbindungselementes (9) und zumindest eines zweiten als Steckverbindung ausgebildeten Verbindungselementes (10) an dem Scheibenträger angeordnet ist, wobei das Endstück der Saatgut- und/oder Düngerzuleitung ohne die Demontage einer der Scheiben zu erfordern abnehmbar ist. Um die Montage des Endstückes (8) der Zuleitung zu verbessern, ist vorgesehen, dass in der oberen Hälfte des Endstückes (8) im Bereich des Festsetzelementes (9, 10) ein formschlüssig an den Scharträger (2) anliegendes und das Endstück (8) zum Scharträger (2) in zumindest einer Ebene fixierendes Fixierungselement (14) an dem Endstück (8) angeordnet ist, dass die Steckverbindung (10) zwei beabstandet zueinander angeordnete und den Scharträger (2) beidseitig einfassende und das Endstück (8) in einer weiteren Ebene zum Scharträger (2) fixierende Laschen (15, 17) aufweist.

## Beschreibung

Die Erfindung betrifft ein Säschar gemäß des Oberbegriffes des Patentanspruches 1.

Ein derartiges Säschar ist in der EP 1 338 187 B1 beschrieben. Bei diesen Säschar ist das Endstück der Saatgutleitung so zwischen den beiden Scheiben angeordnet, dass es nach dem Lösen des oberen Festsetzelementes um das untere Festsetzelement nach hinten schwenken kann. Das Einsetzen des Endstückes zwischen den Scheiben erfordert eine entsprechende Aufmerksamkeit, weil das Endstück nur von der Hand geführt in das untere Festsetzelement zielsicher eingeführt werden muss. Bei beengten und schlecht zugänglichen Einbauverhältnissen erfordert dies eine entsprechende Geschicklichkeit.

Der Erfindung liegt die Aufgabe zu Grunde, die Montage des Endstückes der Zuleitung zu verbessern.

Diese Aufgabe wird erfindungsgemäß dadurch gelöst, dass in der oberen Hälfte des Endstückes im Bereich des Festsetzelementes ein formschlüssig an den Scharträger anliegendes und das Endstück zum Scharträger in zumindest einer Ebene fixierendes Fixierungselement an dem Endstück angeordnet ist, dass die Steckverbindung zwei beabstandet zueinander angeordnete und den Scharträger beidseitig einfassende und das Endstück in einer weiteren Ebene zum Scharträger fixierende Laschen aufweist.

Infolge dieser Maßnahmen kann das Endstück bei der Montage am Scharträger des Schares mittels des Fixierungselementes an dem Scharträger entlang geführt werden, so dass hierdurch quasi ein Hinführen des Endstückes in die richtige Position zu Anordnung an dem Scharträger geschaffen wird. Es ergibt sich also eine unterstützte und einfachere Montage des Endstückes an dem Querträger. Mittels der Laschen wird das Endstück in der richtigen Position in seitlicher Richtung zum Scharträger des Schares gehalten.

Eine besonders gute Befestigung und Montage des Endstückes am Scharträger wird dadurch erreicht, dass der Scharträger und das Fixierungselement jeweils zumindest einen liegend, vorzugsweise etwa horizontalen verlaufenden Bereich, die nach Anordnung des Endstückes an dem Scharträger formschlüssig und in zueinander fixierender Weise aneinander anliegen, aufweisen. Somit kann sich das Endstück über das Fixierungselement am Scharträger abstützen, so dass eine fixierte Anordnung des Endstückes am Scharträger erreicht ist

Bei einem Säschar, bei dem der Scharträger einen aufrecht verlaufenden Bereich aufweist, wobei an diesen aufrechten Bereich anliegend das Endstück angeordnet ist, ist vorgesehen, dass der in diesem aufrecht verlaufenden Bereich des Scharträgers zumindest eine auf der dem Endstück benachbarten Seite angeordnete und zu dem Endstück offene Aussparung angeordnet ist, dass diese Aussparung sich auf Höhe der an dem Endstück angebrachten Laschen befindet, dass zwischen den Laschen ein in die Aussparung eingreifendes Zwischenstück angeordnet ist, dass die Laschen die Aussparung übergreifen. Hierdurch wird eine sichere fixierte und haltbare Anordnung des Endstückes am Scharträger bei einer einfachen Montage des Endstückes erreicht.

Eine einfache Ausgestaltung der Steckverbindung ergibt sich dadurch, dass die Steckverbindung zwei beabstandet zueinander angeordnete Laschenanordnungen aufweist.

Eine besonders schnelle Montage sowie Demontage der jeweiligen Endstücke der Zuleitungen an den einzelnen Säscharen wird dadurch gewährleistet, dass die zumindest beiden Verbindungselemente zur Anordnung des Endstückes am Scharträger derart ausgestaltet sind, dass das Endstück ohne Demontage einer der Scheiben nach hinten aus dem Zwischenraum zwischen den Scheiben herausziehbar ausgestaltet ist. Hierbei ist die Anordnung so gestaltet, dass auch bei der Anordnung einer Druckrolle oder einem anderen nachfolgenden am Scharträger und dem Schar folgend angeordneten sonstigen Elementen das Endstück der Zuleitung auch in diesen Einsatzfällen ohne Demontage einer Scharscheibe zwischen den Scharscheiben montiert bzw. demontiert werden kann.

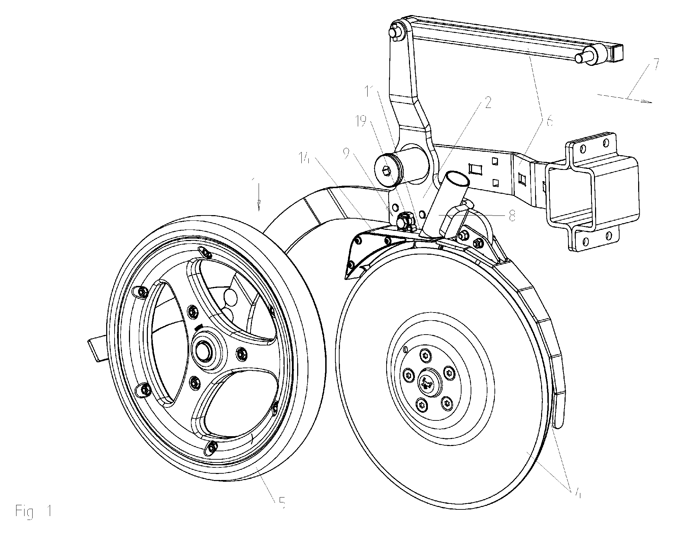

Weitere Einzelheiten der Erfindung sind der Beispielsbeschreibung und den Zeichnungen zu entnehmen. Die Zeichnungen zeigen
- Fig.1: ein erfindungsgemäßes Säschar in perspektivischer Darstellung,
- Fig.2: das Säschar mit im Betriebsstellung montiertem Endstück der Zuleitung in Seitenansicht,
- Fig.3: das Säschar mit nach hinten herausgezogenem Endstück in Zwischenstellung in Seitenansicht,
- Fig.4: das Säschar mit nach hinten und oben herausgezogenem Endstück in Seitenansicht,

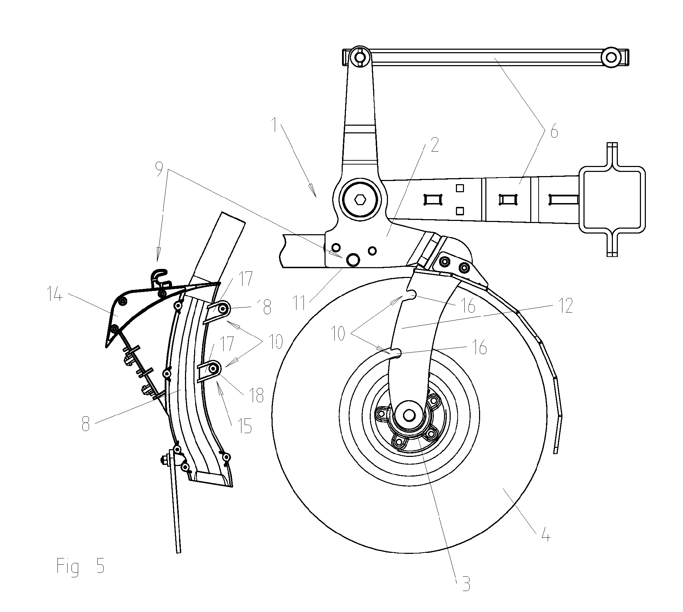

- Fig.5: das Säschar mit einer zum Betrachter hin abgenommenen Scharscheibe des Schares und demontiertem sowie nach hinten herausgezogenem Endstück in Seitenansicht und
- Fig.6: das Endstück kurz vor dem Erreichen der endgültigen Endposition am Scharträger bzw. kurz nach der Demontage vom Scharträger in Seitenansicht.

Das Säschar 1 ist als Doppelscheibenschar ausgestaltet und weist einen Scharträger 2, an dem mittels entsprechender Lagerungen 3 zwei Scharscheiben 4 frei drehbar und schräg zur Fahrtrichtung 5 und entgegengesetzt V-förmig zueinander angestellt angeordnet sind. Hinter den beiden Scheiben 4 ist beabstandet zu den Scheiben 4 eine Tiefenführungs- und Saatgutandruckrolle 5 angeordnet. Die Anordnung dieser Rolle 5 ist optional, das Säschar 1 kann auch ohne diese Rolle 5 eingesetzt werden. Das Säschar 1 mit dem Scharträger 2 sind über Scharhaltearme 6 an nicht dargestellten, quer zur Fahrtrichtung 7 verlaufenden Querbalken einer Sämaschine in bekannter Weise angeordnet. Dem Säschar 1 ist das Endstück 8 zumindest einer Saatgut- und/oder Düngerzuleitung zugeordnet. Dieses Endstück 8 ist über im Folgenden noch näher beschriebenen Verbindungselementen 9 und 10 an dem Scharträger 2 in abnehmbar Weise angeordnet.

Der Scharträger 2 weist einen oberen zumindest etwa horizontal verlaufenden Befestigungsbereich 11 für das Endstück 8 auf. Weiterhin weist der Scharträger 2 einen auf der Vorderseite an den horizontal verlaufenden Befestigungsbereich 11 nach unten in Richtung der Lagerung 3 aufrecht verlaufenden Bereich 12 auf.

In der oberen Hälfte des Endstückes 8 ist an dem Endstück 8 im Bereich des Festsetzelementes 14 des oberen Verbindungselementes 9 das plattenförmig ausgestaltete Fixierungselement 14 angeordnet. Dieses Fixierungselement 14 ist von seinen Konturenverlauf angepasst an den horizontal verlaufenden Befestigungsbereich 11 des Scharträgers 2 für das Endstück 8 ausgestaltet, so dass diese beiden Bereiche 11 und 14 in formschlüssig zueinander passender Weise ausgestaltet sind.

Weiterhin weist das Endstück 8 auf der dem Scharträger 2 benachbarten Bereich zwei beabstandet zueinander angeordnete Laschenanordnungen 15 auf, die als Verbindungselemente 10 zu dem Scharträger 2 zur Montage des Endstückes 8 an dem Scharträger 2 ausgestaltet sind.

Auf der Rückseite des aufrecht verlaufenden Bereiches 12 des Scharträgers 2 sind zwei beabstandet zueinander angeordnete Aussparungen 16, die Bestandteil der Verbindungselemente 10 zur Anordnung des Endstückes 8 an dem Scharträger 2 sind. Diese Aussparungen 16 sind in dem aufrecht verlaufenden Bereich 12 des Scharträgers 2 auf der dem Endstück 8 benachbarten Seite angeordnet und zu dem Endstück 8 offen ausgestaltet. Passend zu der Anordnung der Aussparungen 16 in dem Scharträger 2 sind in entsprechenden Abstand und entsprechender Lage an dem Endstück 8 die Laschen 17 der Laschenanordnung 15 angeordnet. Jede Lasche 17 dieser Anordnung 15 weist zwei beabstandet zueinander angeordnete Laschen 17 auf, die den Scharträger 2 beidseitig umgreifen. Zwischen den beiden Laschen 17 der jeweiligen Laschenanordnung 15 ist ein in die jeweilige Aussparung 16 eingreifendes Zwischenstück 18 angeordnet. Weiterhin übergreifen die Laschen 17 die jeweilige Aussparung 16 wenn das Endstück 8 an dem Scharträger 2 montiert ist.

In der oberen Hälfte des Endstückes 8 ist im Bereich des Festsetzelementes 13 ein formschlüssig an den Scharträger 2 anliegendes und das Endstück 8 zum Scharträger 2 in zumindest einer Ebene fixierendes Fixierungselement 14 an dem Endstück 8 angeordnet. Hierbei liegen diese beiden Teile 11 und 14 formschlüssig so aneinander an, dass eine stabile Anordnung des Endstückes 8 an dem Scharträger 2 in und entgegen der Fahrtrichtung 7 gewährleistet ist. Die Laschenverbindung 15 ist in Verbindung mit den Aussparungen 16 als Steckverbindung ausgebildet und fasst mit der jeweiligen Zwischenverbindung 18 in die zugeordnete Aussparung 16, wobei die Laschen 17 beidseitig die jeweilige Aussparung 16 übergreift, so dass hierdurch das Endstück 8 zusätzlich in der weiteren Ebene zum Scharträger 2, nämlich quer zur Fahrtrichtung 7 fixiert ist. Zusätzlich wird durch schräg verlaufende Anordnung der Aussparungen 16 eine weitere Fixierung des Endstückes 8 erreicht.

An der Oberseite des Fixierungselementes 14, welches an dem Endstück 8 angeordnet ist, ist ein U-förmig ausgestaltetes Befestigungselement 19 des Verbindungselementes 9 angeordnet, welches mit einer als Schraube 20 mit zugeordneter Mutter ausgebildeten Festsetzelement des Verbindungselementes 9, welches am Scharträger 2 angeordnet ist, zur sicheren Montage und Halterung des Endstückes 8 am Scharträger 2 zusammenwirkt.

Durch die Ausgestaltung der Verbindungselemente 9 und 10 als Steckverbindung und der als liegend, vorzugsweise horizontal ausgerichteten Ebene 11 des Scharträgers 2 in Verbindung mit dem Fixierungselement des anderen Verbindungselementes 10 lässt sich das Endstück 8 nach Lösen des Sicherungselementes, welches als Schraubenelement 20 ausgebildet ist, dass zwischen dem liegend angeordneten Scharträgerbereich 11 und dem oberen Verbindungselement 19, welches am Endstück 8 angeordnet ist, ohne Demontage einer Scheibe 4 des Schares 1 nach hinten aus dem Zwischenraum zwischen den Scheiben 4 heraus ziehen. Somit sind die Verbindungselemente 9 und 10 zur Anordnung des Endstückes 8 am Scharträger 2 derart ausgestaltet, dass das Endstück 8 ohne Demontage einer der Scheiben 4 nach hinten aus dem Zwischenraum zwischen den Scheiben 4 herausziehbar ausgestaltet ist. Hierbei ist die Ausgestaltung auch so gestaltet, dass bei einer optional hinter den Scharscheiben angeordneten Rolle 5 das Endstück 8 auch dann montiert und demontiert werden kann.

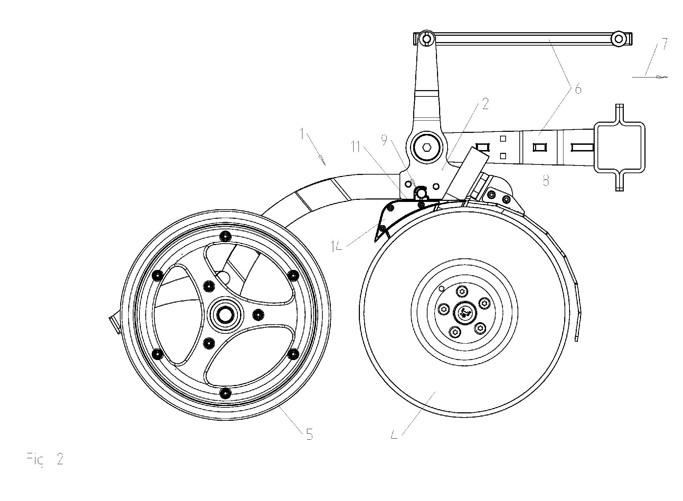

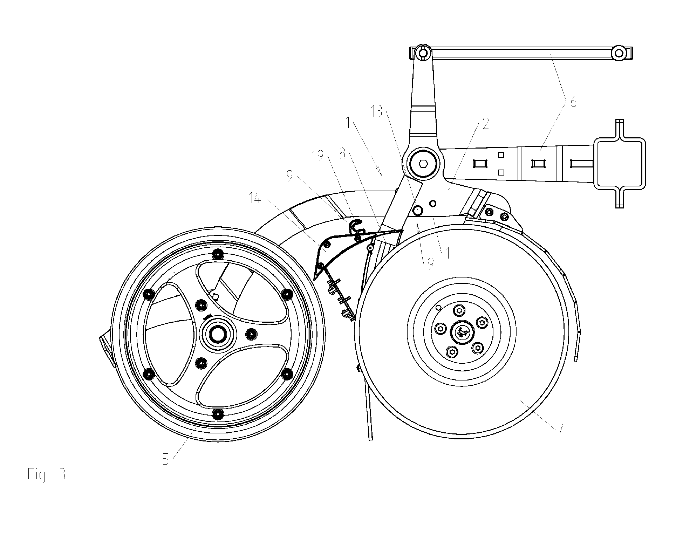

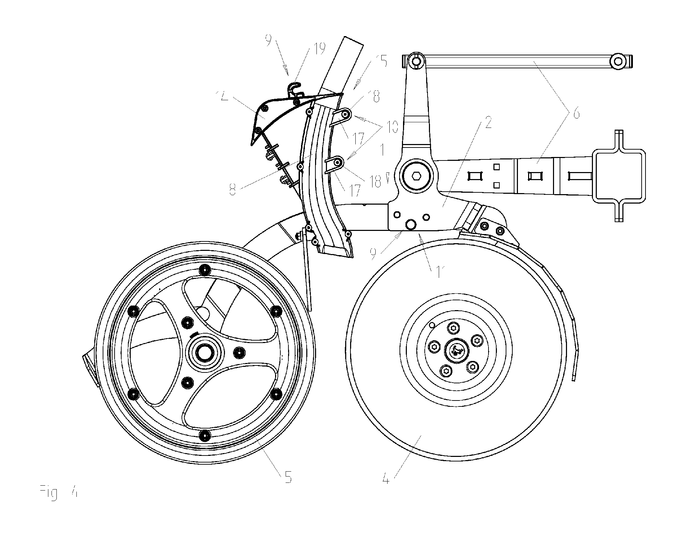

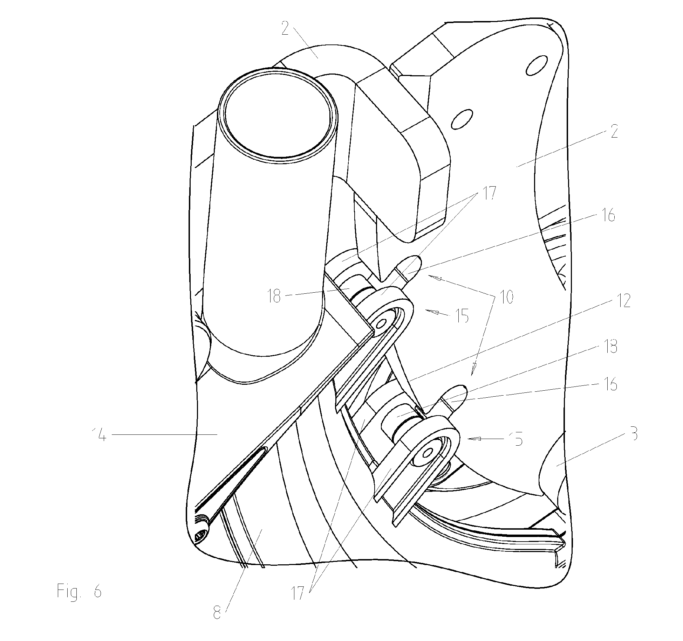

Die Montage des Endstückes 8 an dem Scharträger 2 zwischen den beiden Scharscheiben 4, ohne deren Demontage geschieht in folgender Weise:
Das Endstück 8 wird über die in den Figuren 4 und 3 dargestellten Positionen in die in Figur 2 dargestellte Endmontageposition verbracht. Hierzu wird das Endstück 8 zunächst von oben in den hinteren Bereich zwischen die Scharscheiben 4 geschoben und dann nach vorn in Richtung der Scharträgers 2 bewegt, so dass einerseits die Zwischenstücke 18 zwischen den Laschen 17 in die Aussparungen 16 eingreifen und die Laschen 17 die Aussparung 16 übergreifen, wie Figur 6 zeigt, bis das Endstück 8 an den aufrecht verlaufenden Bereich 12 des Scharträgers 2 zur Anlage kommt und andererseits der obere Bereich des an dem Endstück 8 angeordneten Fixierungselementes 14 an der Unterseite des liegend verlaufenden Bereiches 11 des Scharträgers 2 zur Anlage kommt und das U-förmig ausgestaltete Befestigungselement 19 das als Schraube 13 ausgebildete Sicherungselement umgreift und dort mit der zugeordneten Mutter auf der Schraube 13 festgesetzt wird.

Die Montage des Endstückes 8 an dem Scharträger 2 zwischen den beiden Scharscheiben 4, ohne deren Demontage geschieht in umgekehrter Weise:
Zunächst wird die Mutter des Sicherungselementes 13 gelöst. Anschließend kann das Endstück 8 nach hinten aus dem Zwischenraum zwischen den Scheiben 4 herausgezogen und anschließend weiter nach oben bewegt werden.

## Patentansprüche

1. Säschar mit einem Scharträger, an dem zwei schräg zur Fahrtrichtung und entgegengesetzt V-förmig zueinander angestellte Scheiben, zwischen denen das Endstück zumindest einer Saatgut- und/oder Düngerzuleitung ausmündend, angeordnet sind, wobei das Endstück abnehmbar an dem Scheibenträger mithilfe eines ersten, ein Festsetzelement aufweisenden Verbindungselementes und zumindest eines zweiten als Steckverbindung ausgebildeten Verbindungselementes an dem Scheibenträger angeordnet ist, wobei das Endstück der Saatgut- und/oder Düngerzuleitung ohne die Demontage einer der Scheiben zu erfordern abnehmbar ist, **dadurch gekennzeichnet, dass** in der oberen Hälfte des Endstückes (8) im Bereich des Festsetzelementes (9) ein formschlüssig an den Scharträger (2, 11) anliegendes und das Endstück (8) zum Scharträger in zumindest einer Ebene fixierendes Fixierungselement an dem Endstück (9) angeordnet ist, dass die Steckverbindung (10) zwei beabstandet zueinander angeordnete und den Scharträger (2) beidseitig einfassende und das Endstück (8) in einer weiteren Ebene zum Scharträger (2) fixierende Laschen (15,17) aufweist.

2. Säschar nach Anspruch 1, **dadurch gekennzeichnet, dass** der Scharträger und das Fixierungselement (8) jeweils zumindest einen liegend, vorzugsweise etwa horizontalen verlaufenden Bereich (11), die nach Anordnung des Endstückes (8) an dem Scharträger (2) formschlüssig und in zueinander fixierender Weise aneinander anliegen, aufweisen.

3. Säschar nach zumindest einem der vorstehenden Ansprüche, wobei der Scharträger einen aufrecht verlaufenden Bereich aufweist, wobei an diesen aufrechten Bereich anliegend das Endstück angeordnet ist, **dadurch gekennzeichnet, dass** der in diesem aufrecht verlaufenden Bereich (12) des Scharträgers (2) zumindest eine auf der dem Endstück (8) benachbarten Seite angeordnete und zu dem Endstück (8) offene Aussparung (16) angeordnet ist, dass diese Aussparung (16) sich auf Höhe der an dem Endstück (8) angebrachten Laschen (17) befindet, dass zwischen den Laschen (17) ein in die Aussparung (16) eingreifendes Zwischenstück (18) angeordnet ist, dass die Laschen (17) die Aussparung (16) übergreifen.

4. Säschar nach zumindest einem der vorstehenden Ansprüche, **dadurch gekennzeichnet, dass** die Steckverbindung (10) zwei beabstandet zueinander Laschenanordnungen (15) aufweist.

5. Säschar nach zumindest einem der vorstehenden Ansprüche, **dadurch gekennzeichnet, dass** die zumindest beiden Verbindungselemente (9, 10) zur Anordnung des Endstückes (8) am Scharträger (2) derart ausgestaltet sind, dass das Endstück (8) ohne Demontage einer der Scheiben (4) nach hinten aus dem Zwischenraum zwischen den Scheiben (4) herausziehbar ausgestaltet ist.
